# FASCICULE DE BREVET EUROPEEN

(11) **EP 0 781 672 B1**
(45) Date de publication et mention de la délivrance du brevet: **10.05.2000**
(21) Numéro de dépôt: 96120349.4
(22) Date de dépôt: 18.12.1996
(51) Int. Cl.: B60H 1/00

(54) **Dipositif de commande électronique d'installation de chauffage, ventilation et/ou climatisation d'un véhicule automobile**
Elektronisches Steuergerät für Heizungs/Lüftungs-und Klimaanlage in Kraftfahrzeugen
Electronic control device of a heating, ventilating and/or air conditioning system for a motor vehicle

(30) Priorité: 27.12.1995 FR 9515570
(43) Date de publication de la demande: 02.07.1997
(73) Titulaire: VALEO CLIMATISATION, 78321 La Verrière (FR)
(72) Inventeur: Sarbach, Jean-Charles, 28320 Gallardon (FR)

(56) Documents cités:
- EP-A- 0 158 607
- EP-A- 0 575 956
- DE-A- 2 750 408

## Description

L'invention concerne les dispositifs de commande électronique d'installation de chauffage, ventilation et/ou climatisation de véhicule automobile.

Elle concerne plus particulièrement les dispositifs de commande électronique qui comprennent une mémoire pour une table de correspondance entre des entrées, comprenant des multiplets de paramètres, et des réglages de l'installation, une interface-installation pour instaurer de tels réglages, et un organe de saisie permettant à l'utilisateur de définir un multiplet de paramètres en cours.

L'organe de saisie est logé dans un endroit choisi du véhicule, comme par exemple la façade du tableau de bord, et il comprend généralement une pluralité de touches de saisie qui gèrent un ou plusieurs paramètres aérothermiques. Dans certains cas, il existe des touches de saisie qui déclenchent automatiquement l'instauration d'une configuration de réglages de l'installation pré-programmés par le fabricant du dispositif.

Dans ce type d'installation, l'utilisateur ne peut donc pas réaliser ses propres programmes de réglage, ce qui fait qu'il est obligé à chaque fois qu'il se retrouve dans une situation particulière donnée de définir un multiplet de paramètres. Cette opération est longue, et peut nuire à la sécurité des passagers lorsque le conducteur s'en charge.

Un but de l'invention est donc de procurer un dispositif de commande, notamment d'une installation de chauffage, ventilation et/ou climatisation qui ne présente pas les inconvénients des dispositifs de la technique antérieure.

L'invention propose à cet effet un dispositif du type décrit en introduction, dans lequel, d'une part, l'organe de saisie est muni de touches de programmation, et d'autre part, la mémoire comprend une pluralité de zones, individuellement aptes à stocker un multiplet de paramètres selon un format prédéterminé, ces zones étant respectivement associées aux touches de programmation, de sorte que l'actionnement d'une de ces touches de programmation stocke le multiplet de paramètres en cours comme "multiplet de paramètres programmés" dans la zone de programmation associée à la touche. Le dispositif comprend en outre des moyens de sélection permettant la désignation selon un critère prédéfini d'un multiplet de paramètres programmés, de sorte que l'interface-installation instaure les réglages correspondant à ce multiplet de paramètres programmés.

De la sorte, on réalise un dispositif de commande électronique qui permet la mémorisation d'une pluralité de programmes de réglages définis par l'utilisateur, en vue de leur utilisation ultérieure par sélection de l'une des touches de programmation.

Selon une autre caractéristique de l'invention, les moyens de sélection sont agencés pour autoriser la mémorisation, selon le critère prédéfini, du multiplet de paramètres en cours comme multiplet de paramètres programmés dans la zone de programmation associée à la touche de programmation.

Selon encore une autre caractéristique de l'invention, le critère prédéfini porte sur la durée de l'actionnement d'une touche de programmation.

Cette durée est préférentiellement mesurée par des moyens de temporisation que comprennent les moyens de sélection, lesquels sont agencés pour sélectionner, en fonction du critère prédéfini, un mode de fonctionnement des touches de programmation parmi un premier mode dans lequel une touche de programmation actionnée stocke un multiplet de paramètres en cours comme multiplet de paramètres programmés dans la zone de programmation associée à la touche, et un second mode dans lequel une touche de programmation désigne un multiplet de paramètres programmés.

Selon encore une autre caractéristique de l'invention, les moyens de sélection comportent des moyens propres à effectuer une comparaison entre la durée d'actionnement d'une touche de programmation et un seuil temporel choisi, le franchissement du seuil par valeur supérieure ou inférieure servant de critère prédéfini.

Avantageusement, en cas de détection d'un franchissement de seuil par valeur supérieure, les moyens de sélection sont agencés pour forcer la touche de programmation actionnée à fonctionner selon le premier mode, tandis qu'en cas de franchissement de seuil par valeur inférieure, les moyens de sélection sont agencés pour forcer la touche de programmation actionnée à fonctionner selon le second mode.

Selon encore une autre caractéristique de l'invention, la mémoire comprend une zone dite "de réglage en cours", destinée à mémoriser systématiquement dans un multiplet de paramètres en cours l'état du ou des paramètres qui viennent d'être définis à l'aide de l'organe de saisie.

Ainsi, dès que l'utilisateur a terminé de définir un multiplet de paramètres, celui-ci est stocké afin de pouvoir éventuellement resservir plus tard.

Préférentiellement, en cas de fonctionnement de l'installation sur des réglages correspondant à un multiplet de paramètres programmés, l'interface-installation est apte à rétablir les réglages correspondant au multiplet de réglages en cours mémorisé dans la zone de réglage en cours de la mémoire, lorsque l'organe de saisie est actionné.

De la sorte, lorsque l'on est dans un mode de fonctionnement programmé et que l'on désire rétablir les réglages qui étaient en cours initialement, il suffit simplement d'actionner l'une quelconque des touches de saisie de l'organe de saisie.

D'autres caractéristiques et avantages de l'invention apparaîtront à l'examen de la description détaillée ci-après et des dessins annexés, sur lesquels:

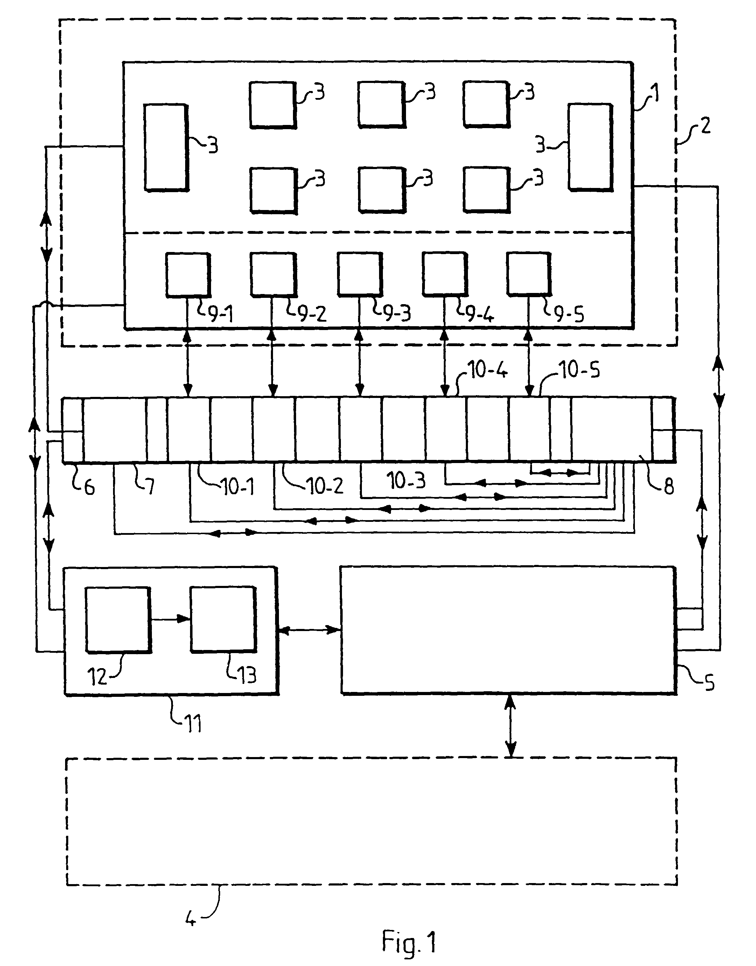

- la figure 1 illustre schématiquement un dispositif de commande d'une installation de chauffage, ventilation et/ou climatisation, selon l'invention ; et
- les figures 2 et 3 sont deux exemples de claviers/afficheurs utilisateur, avec mise en oeuvre de l'invention.

Une installation de chauffage, ventilation et/ou climatisation comprend notamment un organe de saisie 1, généralement logé dans un boîtier 2, et comprenant une pluralité de touches de saisie 3, de type bouton poussoir ou rotatif, ou curseur, ou touche sensitive, destinées à définir les paramètres aérothermiques de tout ou partie d'un habitacle de véhicule automobile, par exemple.

On entend par paramètres aérothermiques, notamment la température, le débit d'air et le mode de distribution d'air traité par les éléments 4 constituants l'installation .

Le boîtier 2 est par exemple logé dans la planche de bord du véhicule entre le conducteur et le passager avant droit, lesquels seront désormais appelés utilisateurs. Bien entendu, l'organe de saisie peut être constitué des seules touches de saisie, sans faire appel à un boîtier. Dans ce cas, les touches sont intégrées dans la planche de bord qui comporte à cet effet une pluralité d'ouvertures.

Les touches de saisie 3 sont connectées à une interface-installation 5 par l'intermédiaire d'une mémoire 6 divisée en zones de stockage indépendantes, parmi lesquelles une zone dite "de réglage en cours" 7 mémorise systématiquement dans un multiplet de paramètres dit "multiplet de paramètres en cours" l'état des paramètres aérothermiques qui sont définis à l'aide de l'organe de saisie 1, et une zone dite de "correspondance" 8 comprend un tableau de correspondance permettant d'établir une correspondance prédéterminée entre des entrées comprenant un multiplet de paramètres (et des sorties de capteurs, éventuellement les valeurs de réglage en cours), et des réglages des éléments 4 de l'installation. En d'autres termes, la zone de mémoire 8 contient la fonction de transfert de la régulation ; la coexistence de plusieurs fonctions de transfert indépendantes est envisageable.

Ainsi, lorsque l'utilisateur définit par saisie un ou plusieurs paramètres à l'aide des touches de saisie 3 de l'organe de saisie 1, ces paramètres sont mémorisés sous la forme d'un multiplet de paramètres en cours d'un format donné, lequel multiplet est ensuite appliqué à la table de correspondance de la zone de correspondance 8, laquelle fournit en retour à l'interface-installation 5 des informations lui permettant d'instaurer les réglages des éléments 4 correspondant au multiplet de paramètres en cours défini par l'utilisateur.

Dans le cas d'une installation de chauffage et ventilation, les éléments 4 comprennent notamment un pulseur à régime variable destiné à gérer le débit d'air, un radiateur de température destiné à réchauffer l'air issu du pulseur et une pluralité de volets de distribution pour répartir l'air dans un boîtier de distribution d'air et le distribuer au niveau des différentes bouches de distribution d'air logées dans l'habitacle du véhicule.

Bien entendu, l'invention s'applique tout aussi bien aux dispositifs de climatisation.

Afin de permettre à l'utilisateur de mémoriser certains multiplets de paramètres dont il a besoin, et qui ne font pas partie des éventuels multiplets pré-programmés accessibles par certaines des touches de saisie, l'invention prévoit au niveau de l'organe de saisie 1, une pluralité de touches de programmation 9-i (i=1 à 5 dans l'exemple) connectées respectivement à des zones de programmation 10-i (i=1 à 5 dans l'exemple) réalisées dans la mémoire 6.

Chaque zone de programmation 10-i est apte à stocker un multiplet de paramètres (formant un multiplet de paramètres en cours) défini à l'aide des touches de saisie 3 et de la touche de programmation 9-i à laquelle elle est connectée. Un tel multiplet est dit "multiplet de paramètres programmés". Son mode de mémorisation est donné plus loin.

Afin de minimiser le nombre de touches, l'invention prévoit un double mode de fonctionnement pour les touches de programmation 9. Un premier mode dans lequel la touche de programmation actionnée stocke un multiplet de paramètres en cours comme multiplet de paramètres programmés dans la zone de programmation associée à la touche de programmation, et un second mode dans lequel une touche de programmation désigne un multiplet de paramètres programmés, permettant ainsi à l'interface-installation 5 d'instaurer des réglages correspondant à ce multiplet de paramètres programmés.

La sélection entre les deux modes de fonctionnement est réalisée à l'aide de moyens de sélection 11 qui comportent à cet effet une temporisation 12 et un comparateur électronique 13.

Dès qu'une touche de programmation 9-i est actionnée, cela déclenche automatiquement la mesure d'une durée d'actionnement par la temporisation 12. Cette mesure se poursuit tant qu'une pression est exercée sur la même touche de programmation 9-i. Dès que cette pression s'interrompt, la temporisation 12 cesse sa mesure de durée, et fournit au comparateur 13 le résultat R de sa mesure. Ce résultat R est alors comparé à un seuil temporel prédéfini S mémorisé dans le comparateur 13.

Selon l'invention, si le seuil S est inférieur au résultat R (S < R), il y a franchissement du seuil par valeur supérieure, et par conséquent, on considère que l'utilisateur veut mémoriser le multiplet de paramètres en cours dans la zone de programmation 10-i. En revanche, si le seuil S est supérieur au résultat R (S > R), il y a franchissement du seuil par valeur inférieure, et par conséquent, on considère que l'utilisateur veut définir le multiplet de paramètres programmés qui se trouve stocké dans la zone de programmation 10-i afin d'instaurer les réglages correspondants.

Ainsi, une pression brève (durée inférieure au seuil temporel) d'une touche de programmation instaure des réglages mémorisés, tandis qu'une pression longue (durée supérieure au seuil temporel) déclenche la mémorisation du multiplet de paramètres en cours.

Bien entendu, on pourrait parfaitement envisager de fonctionner de façon opposée, une pression longue d'une touche de programmation instaurant des réglages mémorisés, tandis qu'une pression brève déclencherait la mémorisation du multiplet de paramètres en cours.

Le franchissement du seuil, choisi lors de la fabrication du dispositif de commande, sert donc de critère de sélection prédéfini. Le seuil temporel peut être très court, comme par exemple une seconde. Ainsi, un simple actionnement par pression ponctuelle d'une touche de programmation déclenche automatiquement l'instauration des réglages correspondants.

Lorsqu'un multiplet de paramètres en cours est mémorisé en tant que multiplet de paramètres programmés, les réglages qui sont instaurés par l'interface-installation 5 sont ceux qui sont mémorisés dans la zone de réglages en cours 7 puisque ce sont les mêmes. Par conséquent, l'instauration des réglages correspondants s'effectue comme dans le mode de fonctionnement standard (hors programmation) décrit précédemment.

Les composants électroniques nécessaires à la fabrication du dispositif selon l'invention peuvent être trouvés sans difficulté dans le commerce.

Un tel dispositif permet à l'utilisateur, par exemple, de programmer des réglages adaptés à son métabolisme, ou de programmer plusieurs niveaux de confort, ou bien de programmer une convergence rapide (fort débit d'air) ou une convergence lente (faible débit d'air), ou encore de programmer des réglages adaptés à la consommation de tabac.

Le fonctionnement du dispositif selon l'invention à l'aide des touches de programmation est résumé ci-après.

Lorsque l'utilisateur souhaite mémoriser un multiplet de paramètres particulier, il définit ces paramètres à l'aide des touches de saisie 3, puis il actionne par une pression prolongée la touche de programme 9-i qu'il souhaite faire correspondre avec le multiplet défini. La temporisation 12 effectue sa mesure de durée, la délivre au comparateur qui la compare au seuil. Si le seuil est inférieur au résultat de la mesure, le moyen de sélection autorise la mémorisation du multiplet dans la zone de programmation 10-i connectée à la touche de programmation 9-i.

Si un multiplet se trouve déjà mémorisé dans la zone de programmation 10-i, il est alors définitivement perdu et remplacé par le nouveau multiplet de paramètres programmés.

Le multiplet qui se trouve stocké dans la zone de réglages en cours 7 est comparé à la table de correspondance de la zone de correspondance 8 qui délivre les informations correspondantes à l'interface-installation 5 qui instaure les réglages correspondant à ces informations.

En revanche, si le résultat de la mesure de durée est inférieur au seuil, le moyen de sélection 11 ordonne la comparaison entre le contenu de la zone de programmation 10-i, connectée à la touche de programmation 9-i actionnée, et la table de correspondance contenue dans la zone de correspondance 8 qui délivre alors les informations correspondantes à l'interface-installation 5, laquelle instaure les réglages correspondant à ces informations.

Dans l'hypothèse où aucun multiplet ne se trouve stocké dans la zone de programmation 10-i, le moyen de sélection ordonne l'instauration des réglages correspondant au multiplet de paramètres en cours, stocké dans la zone de réglages en cours 7.

Par ailleurs, lorsque l'utilisateur désire rétablir des réglages qui étaient en cours avant l'utilisation du mode programme, il lui suffit d'actionner l'une quelconque des touches de saisie 3 de l'organe de saisie 1.

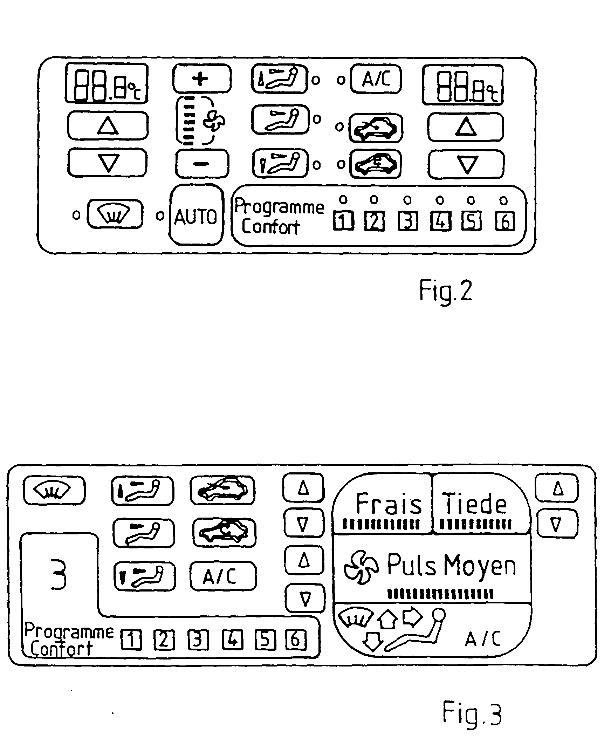

La figure 2 illustre un premier exemple de clavier-afficheur utilisé selon l'invention. Le pavé rectangulaire, en bas à droite, contient les touches et voyants des modes programmés. Sept touches à voyant permettent la sélection de paramètres : pare-brise, habitacle, recyclage ou non, et climatisation (A/C). Deux paire de touches-curseur avec cadran numérique permettent la sélection de température en deux zones; une troisième paire de touches-curseur avec cadran numérique gradué permet le réglage du débit d'air. Une touche AUTO permet la sélection d'un niveau de confort standard: température 21°C, tandis que pulseur, distribution, entrée d'air et climatisation opèrent en mode automatique, défini par les paramètres internes et externes.

L'action sur les touches spécialisées permet de sortir du mode automatique ou de confort programmé. Lorsque l'état désiré par l'utilisateur est atteint, l'action sur une touche programme, comme décrit plus haut, jusqu'à allumage du voyant correspondant (ou signal sonore) mémorise les paramètres de cours dans le programme de cette touche. A la mise en service du véhicule, toutes les touches programmes sont par exemple initialisées dans le mode AUTO.

La convergence (vitesse avec laquelle le système atteint l'état souhaité) se fait par la gestion du pulseur. Elle peut être rapide ou douce selon le mode de programmation.

La figure 3 illustre un second exemple de clavier-afficheur utilisé selon l'invention. Le pavé en L, en bas à gauche, contient l'affichage du mode programmé en cours (le cas échéant), surmontant les touches de sélection de programmes pré-enregistrés. En haut à gauche, sept touches permettent la sélection de paramètres : pare-brise, habitacle, recyclage ou non, et climatisation (A/C). En partie droite, un pavé rectangulaire d'affichage (afficheur principal) permet de visualiser en bas les états résultant des sept touches précitées, et en haut les réglages de la température en deux zones, ainsi que du débit du pulseur, les sélections de paramètres correspondants, le cas échéant, étant accessibles par trois paires de touches de curseur circonvoisines. L'information numérique de température ou de vitesse pulseur n'étant pas toujours bien perçue par l'utilisateur, il lui est substitué un affichage qualitatif par degrés: Froid, Frais, Confort, Tiède, Chaud ; Mini, Faible, Moyen, Fort, Maxi. La Touche AUTO peut ici être absente.

L'invention ne se limite pas au mode de réalisation décrit ci-avant, mais elle embrasse toutes les variantes que pourra développer l'homme de l'art dans le cadre des revendications ci-après.

## Revendications

1. Dispositif de commande électronique d'installation de chauffage, ventilation et/ou climatisation d'un véhicule automobile, du type comprenant une mémoire (6,8) pour une table de correspondance entre des entrées, comprenant des multiplets de paramètres, et des réglages de l'installation, une interface-installation (5) pour instaurer de tels réglages, et un organe de saisie (1,3) permettant à l'utilisateur de définir un multiplet de paramètres en cours,
caractérisé en ce que l'organe de saisie (1) est muni de touches de programmation (9),
en ce que la mémoire (6) comprend une pluralité de zones (10), individuellement aptes à stocker un multiplet de paramètres selon un format prédéterminé, ces zones étant respectivement associées aux touches de programmation (9), de sorte que l'actionnement d'une de ces touches de programmation (9) stocke le multiplet de paramètres en cours comme multiplet de paramètres programmés dans la zone de programmation (10) associée à la touche, et
en ce que le dispositif comprend en outre des moyens de sélection (11-13) permettant la désignation selon un critère prédéfini d'un multiplet de paramètres programmés, de sorte que l'interface-installation (5) instaure des réglages correspondant à ce multiplet de paramètres programmés.

2. Dispositif selon la revendication 1, caractérisé en ce que les moyens de sélection (11) sont agencés pour autoriser la mémorisation, selon le critère prédéfini, du multiplet de paramètres en cours comme multiplet de paramètres programmés dans la zone de programmation (10) associée à la touche de programmation (9).

3. Dispositif selon l'une des revendications 1 et 2, caractérisé en ce que le critère prédéfini porte sur la durée de l'actionnement (R) d'une touche de programmation (9).

4. Dispositif selon la revendication 3, caractérisé en ce que les moyens de sélection (11) comprennent des moyens de temporisation (12) propres à mesurer la durée de l'actionnement (R) des touches de programmation (9), et sont agencés pour sélectionner, en fonction du critère prédéfini, un mode de fonctionnement des touches de programmation (9) parmi un premier mode dans lequel une touche de programmation actionnée stocke un multiplet de paramètres en cours comme multiplet de paramètres programmés dans la zone de programmation (10) associée à la touche, et un second mode dans lequel une touche de programmation (9) désigne un multiplet de paramètres programmés.

5. Dispositif selon la revendication 4, caractérisé en ce que les moyens de sélection (11) comportent des moyens de comparaison (13) propres à effectuer une comparaison entre la durée d'actionnement (R) d'une touche de programmation (10) et un seuil temporel (S) choisi, le franchissement du seuil par valeur supérieure ou inférieure servant de critère prédéfini.

6. Dispositif selon la revendication 5, caractérisé en ce qu'en cas de détection d'un franchissement de seuil par valeur supérieure, les moyens de sélection (11) sont agencés pour faire fonctionner selon le premier mode la touche de programmation (9) actionnée, tandis qu'en cas de franchissement de seuil par valeur inférieure, les moyens de sélection (11) sont agencés pour faire fonctionner selon le second mode la touche de programmation (9).

7. Dispositif selon l'une des revendications 1 à 6, caractérisé en ce que la mémoire (6) comprend une zone dite "de réglage en cours" (7), destinée à mémoriser systématiquement dans un multiplet de paramètres en cours l'état du ou des paramètres qui viennent d'être définis à l'aide de l'organe de saisie (1,3).

8. Dispositif selon la revendication 7, caractérisé en ce qu'en cas de fonctionnement de l'installation sur des réglages correspondant à un multiplet de paramètres programmés, les moyens de sélection (11) sont aptes à rétablir des réglages correspondant au multiplet de réglages en cours mémorisé dans la zone de réglage en cours (7) de la mémoire (6), lorsque l'organe de saisie (10) est actionné.

9. Dispositif selon l'une des revendications précédentes, caractérisé en ce que les paramètres comprennent au moins un débit d'air du pulseur que comprend l'installation, ainsi qu'une température et un mode de distribution d'air traité par ladite installation.

## Claims

1. Electronic control apparatus for a heating, ventilating and/or air conditioning apparatus for a motor vehicle, of the type including a memory (6, 8) for a table of correspondence between inputs comprising sets of parameters and adjustments of the installation, an installation interface (5) for establishing such adjustments, and a setting device (1, 3) enabling the user to define a set of current parameters,
characterised in that the setting device (1) includes programming touch pads (9),
in that the memory (6) comprises a plurality of zones (10) adapted so as individually to store a set of parameters in predetermined format, -the said zones being associated with the respective programming touch pads (9), so that actuation of one of the said programming touch pads (9) stores the set of current parameters as a set of parameters programmed into the programming zone (10) associated with the touch pad, and
in that the apparatus further includes selection means (11 - 13) for enabling a set of programmed parameters to be designated in accordance with a predetermined criterion, such that the installation interface (5) establishes adjustments corresponding to the said set of programmed parameters.

2. Apparatus according to Claim 1, characterised in that the selection means (11) are so arranged as to enable the set of current parameters to be memorised in accordance with the predefined criterion, as a set of parameters programmed into the programming zone (10) associated with the programming touch pad (9).

3. Apparatus according to Claim 1 or Claim 2, characterised in that the predetermined criterion relates to the duration of the actuation (R) of a programming touch pad (9).

4. Apparatus according to Claim 3, characterised in that the selection means (11) include timing means (12) for measuring the duration of the actuation (R) of the programming touch pads (9), and are so arranged as to select an operating mode of the programming touch pads (9), as a function of the predetermined criterion, from a first mode in which a programming touch pad which has been actuated stores a set of current parameters as a set of parameters programmed into the programming zone (10) associated with the touch pad, and a second mode in which a programming touch pad (9) designates a set of programme parameters.

5. Apparatus according to Claim 4, characterised in that the selection means (11) include comparison means (13) for making a comparison between the duration of actuation (R) of a programming touch pad (9) and a selected time threshold (S), deviation from the threshold with a greater or lesser value serving as the predetermined criterion.

6. Apparatus according to Claim 5, characterised in that, in the event that deviation from the threshold with a greater value is detected, the selection means (11) are arranged to cause the actuated programming touch pad (9) to operate in the first mode, while in the event of deviation from the threshold with a lower value, the selection means (11) are arranged to cause the programming touch pad (9) to operate in the second mode.

7. Apparatus according to one of Claims 1 to 6, characterised in that the memory (6) includes a so-called "current adjustment" zone (7), which is adapted to memorise systematically, in a set of current parameters, the state of the parameter or parameters that have just been defined with the aid of the setting device (1, 3).

8. Apparatus according to Claim 7, characterised in that, in the event of operation of the installation on adjustments corresponding to a set of programmed parameters, the selection means (11) are adapted to reestablish adjustments corresponding to the set of current adjustments memorised in the current adjustment zone (7) of the memory (6), when the setting device (1) is actuated.

9. Apparatus according to one of the preceding Claims, characterised in that the parameters include at least one flow rate of air from the blower which is included in the installation, together with a temperature and a pattern of distribution of air treated by the said installation.

## Patentansprüche

1. Elektronisches Steuergerät für eine Heiz-, Belüftungs- und/oder Klimaanlage in einem Kraftfahrzeug, vom Typ, umfassend einen Speicher (6, 8) für eine Zuordnungstabelle von Eintritten, umfassend Parametermultiplets und Steuerungen der Anlage, eine Anlagenschnittstelle (5), um solche Steuerungen zu bewirken, und eine Erfassungs- bzw. Eingabeeinrichtung (1, 3), die es dem Benutzer ermöglicht, im laufenden Betrieb ein Parametermultiplet zu definieren, dadurch gekennzeichnet, daß die Erfassungseinrichtung (1) mit Programmiertasten (9) bereitgestellt ist, daß der Speicher (6) eine Vielzahl an Zonen (10) umfaßt, die individuell in der Lage sind, ein Parametermultiplet gemäß einem vorbestimmten Format zu speichern, wobei die Zonen jeweils Programmier- bzw. Programmtasten (9) zugeordnet sind, so daß die Betätigung einer der Programmtasten (9) das Parametermultiplet im laufenden Betrieb speichert als in der der Taste zugeordneten Programmierzone (10) programmiertes Parametermultiplet, speichert und daß das Gerät ferner Auswahlmittel (11-13) umfaßt, die es ermöglichen, gemäß einem vorbestimmten Kriterium ein programmiertes Parametermultiplet in solch einer Weise zu bestimmen, daß die Anlagenschnittstelle (5) die diesem programmierten Parametermultiplet entsprechenden Steuerungen bewirkt.

2. Gerät nach Anspruch 1, dadurch gekennzeichnet, daß die Auswahlmittel (11) ausgebildet sind, um das Speichern gemäß dem vorbestimmten Kriterium des Parametermultiplets im Betrieb als programmiertes Parametermultiplet in der der Programmtaste (9) zugeordneten Programmierzone (10) zu erlauben.

3. Gerät nach einem der Ansprüche 1 und 2, dadurch gekennzeichnet, daß das vorbestimmte Kriterium auf die Betätigungsdauer (R) einer Programmtaste (9) abstellt.

4. Gerät nach Anspruch 3, dadurch gekennzeichnet, daß die Auswahlmittel (11) Zeit- bzw. Verzögerungsmittel (12) umfassen, die geeignet sind, die Betätigungsdauer (R) der Programmtasten (9) zu messen und ausgebildet sind zur Auswahl, abhängig von dem vorbestimmten Kriterium, eines Funktionsmodus der Programmtasten (9), unter einem ersten Modus, in welchem eine betätigte Programm- bzw. Programmiertaste ein Parametermultiplet im Betrieb als programmiertes Parametermultiplet in der der Taste zugeordneten Programm- bzw. Programmierzone (10) speichert, und einem zweiten Modus, in welchem eine Programmtaste (9) ein programmiertes Parametermultiplet angibt.

5. Gerät nach Anspruch 4, dadurch gekennzeichnet, daß die Auswahlmittel (11) Vergleichsmittel (13) umfassen, die geeignet sind, einen Vergleich durchzuführen zwischen der Betätigungsdauer (R) einer Programmtaste (10) und einer gewählten Zeitschwelle (S), wobei das Überschreiten der Schwelle um einen größeren oder kleineren Wert als vorbestimmtes Kriterium dient.

6. Gerät nach Anspruch 5, dadurch gekennzeichnet, daß in dem Fall der Erfassung einer Überschreitung der Schwelle durch einen größeren Wert die Auswahlmittel (11) ausgebildet sind, um die betätigte Programmtaste (9) gemäß einem ersten Modus funktionieren zu lassen, während in dem Fall des Überschreitens der Schwelle durch einen geringeren Wert die Auswahlmittel (11) ausgebildet sind, um die Programm- bzw. Programmiertaste (9) gemäß dem zweiten Modus funktionieren zu lassen.

7. Gerät nach einem der Ansprüche 1 bis 6, dadurch gekennzeichnet, daß der Speicher (6) eine sogenannte "Im-Betrieb-Steuerung"-Zone (7) umfaßt, vorgesehen zum systematischen Im-Betrieb-Speichern bzw. kontinuierlichen Speichern in einem Parametermultiplet des Zustandes oder der Parameter, welche soeben unter Einsatz der Erfassungseinrichtung (1, 3) definiert wurde bzw. wurden.

8. Gerät nach Anspruch 7, dadurch gekennzeichnet, daß in dem Fall der Funktion der Anlage, basierend auf Steuerungen, die einem programmierten Parametermultiplet entsprechen, die Auswahlmittel (11) in der Lage sind, Steuerungen bzw. Einstellungen wiederherzustellen, die dem Im-Betrieb-Steuer-Multiplet entsprechen, welches in der Im-Betrieb- bzw. aktuellen Steuerzone (7) in dem Speicher (6) gespeichert ist bzw. wird, wenn das Erfassungs- bzw. Eingabeorgan (10) betätigt wird.

9. Gerät nach einem der vorangegangenen Ansprüche, dadurch gekennzeichnet, daß die Parameter zumindest einen Luftdurchsatz des Gebläses umfassen, welches in der Anlage enthalten ist, sowie eine Temperatur und einen Modus zur Verteilung der durch die Anlage behandelten Luft.
